## Europäisches Patentamt
## European Patent Office
## Office européen des brevets

(19)

(11) Numéro de publication : **0 331 535 B1**

(12) # FASCICULE DE BREVET EUROPEEN

(45) Date de publication du fascicule du brevet :
07.08.91 Bulletin 91/32

(51) Int. Cl.⁵ : **B60T 13/52**

(21) Numéro de dépôt : 89400164.3

(22) Date de dépôt : 20.01.89

(54) Servomoteur d'assistance au freinage.

(30) Priorité : 29.02.88 FR 8802488
29.08.88 FR 8811322

(43) Date de publication de la demande :
06.09.89 Bulletin 89/36

(45) Mention de la délivrance du brevet :
07.08.91 Bulletin 91/32

(84) Etats contractants désignés :
DE ES FR GB IT

(56) Documents cités :
EP-A- 0 119 880
AU-A- 546 873
DE-A- 3 245 638
FR-A- 2 406 551
US-A- 4 445 335

(73) Titulaire : BENDIX EUROPE Services
Techniques S.A.
126 rue de Stalingrad
F-93700 Drancy (FR)

(72) Inventeur : Gautier, Jean-Pierre
Bendix France S.A. 126 rue de Stalingrad
F-93700 Drancy (FR)
Inventeur : Perez, Miguel
Bendix, France S.A. 126 rue de Stalingrad
F-93700 Drancy (FR)

(74) Mandataire : Lejet, Christian
Bendix Europe Service Techniques Service
Brevets 126 rue de Stalingrad
F-93700 Drancy (FR)

EP 0 331 535 B1

Jouve, 18, rue Saint-Denis, 75001 PARIS

## Description

L'invention concerne un servomoteur d'assistance au freinage et s'applique avantageusement à tous les véhicules automobiles dont le circuit de freinage est équipé d'un tel servomoteur.

Un servomoteur d'assistance au freinage de conception classique, par exemple celui décrit dans le document US-A-4,445,335 comprend notamment une enveloppe extérieure dans laquelle une chambre avant et une chambre arrière sont formées de part et d'autre d'une membrane souple, fixée de façon étanche sur un piston creux mobile selon l'axe du servomoteur. Le servomoteur est monté, en règle générale, sur le tablier du compartiment moteur du véhicule par des vis de montage qui sont fixées sur la partie arrière de l'enveloppe du côté du compartiment moteur. Il est donc nécessaire de serrer des boulons sur les vis de montage du côté de la cabine du véhicule. Cette manoeuvre présente des inconvénients pour les constructeurs lors de la fabrication du véhicule, car elle exige l'exécution d'opérations à la fois du côté du compartiment moteur et du côté de la cabine.

La présente invention donne la possibilité de réaliser un servomoteur d'assistance en freinage qui permette son montage dans un véhicule en travaillant du seul côté de la paroi où est monté le servomoteur.

On sait d'autre part qu'un tel servomoteur est un objet relativement encombrant et qu'il gêne le passage des tringles, câbles ou tiges reliés aux autres dispositifs de commande du véhicule, notamment aux pédales d'accélérateur ou d'embrayage.

La présente invention a donc pour but de réaliser un servomoteur d'assistance au freinage qui, malgré sa taille, ne nuit pas au passage d'autres éléments de commande.

L'invention concerne donc un servomoteur d'assistance au freinage comprenant une enveloppe et une membrane souple qui divise de manière étanche l'intérieur de l'enveloppe en une chambre avant et une chambre arrière et un piston creux mobile dans l'enveloppe auquel est fixée la membrane souple.

Il comprend au moins un passage qui traverse le servomoteur de manière étanche d'une face à la face opposée de l'enveloppe, ce passage étant constituée par un tube dont la première extrémité est fixée à l'intérieur de l'enveloppe à l'une des faces de cette dernière.

Selon l'invention, après l'assemblage complet du servomoteur la seconde extrémité du tube est montée à coulissement sur un épaulement radial prévu à cet effet à l'intérieur de l'enveloppe sur l'autre face de cette dernière.

D'autres caractéristiques de l'invention font l'objet des sous-revendications.

On connaît de FR-A-2406551 et de EP-A-0119880, qui correspondent au préambule de la revendication 1, un servomoteur comportant un organe traversant un servomoteur de manière étanche d'une face à la face opposée de l'enveloppe, mais cet organe est un organe de transmission de forces auxquelles l'enveloppe est soumise, et est fixé à ses deux extrémités aux faces opposées de l'enveloppe.

L'invention sera mieux comprise et d'autres objets, avantages et caractéristiques de celle-ci apparaîtront plus clairement à la lecture de la description qui suit de modes préférés de réalisation donnés à titre non limitatif, en relation avec les dessins annexés sur lesquels :

— la figure 1 est une vue en coupe brisée longitudinale d'un servomoteur d'assistance au freinage réalisé conformément à un premier mode de réalisation de l'invention ;

— la figure 2 est une vue partielle en coupe longitudinale d'un servomoteur selon un deuxième mode de réalisation de l'invention ;

— la figure 3 est une section à plus grande échelle d'une partie de la figure 2 ;

— la figure 4 est une vue, analogue à celle de la figure 2, d'un servomoteur selon un troisième mode de réalisation de l'invention ;

— la figure 5 est une vue partielle en coupe d'un servomoteur selon la figure 1 traversé par un moyen de commande ; et

— la figure 6 est une vue en coupe brisée longitudinale d'un servomoteur selon un quatrième mode de réalisation de l'invention.

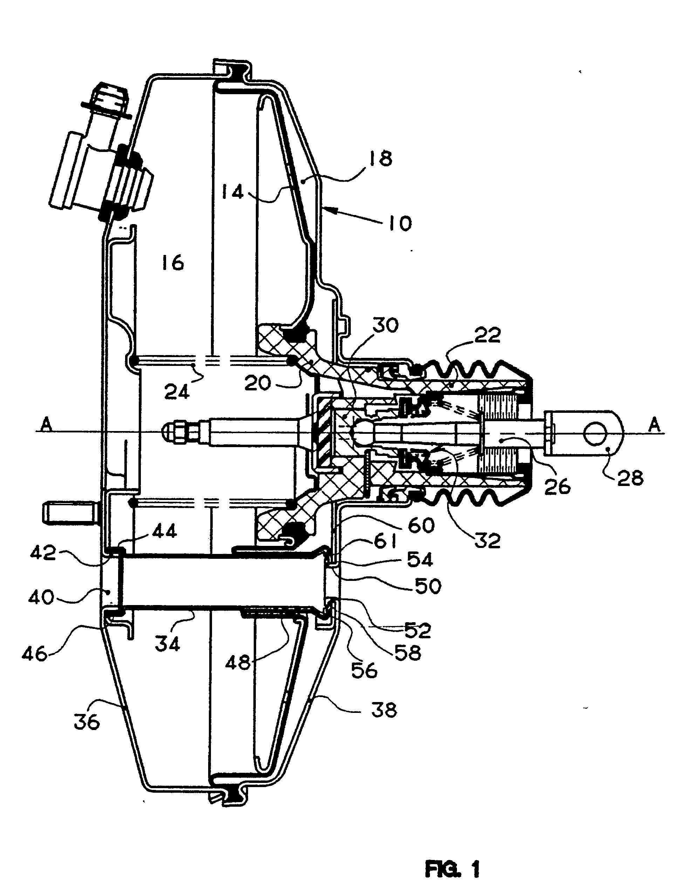

La figure 1 représente un servomoteur d'assistance au freinage prévu pour être placé, de façon habituelle, entre la pédale de frein d'un véhicule et le maître-cylindre commandant le circuit de freinage hydraulique.

Le servomoteur comprend une enveloppe extérieure 10 en forme de coquille, présentant sensiblement, dans l'exemple représenté, une symétrie de révolution autour d'un axe A-A. Une membrane souple en élastomère 12, renforcée dans sa partie centrale par un disque support métallique 14, définit à l'intérieur de l'enveloppe 10 une chambre avant 16 et une chambre arrière 18. Un piston creux reçoit un bord circulaire interne de la membrane 12 et est prolongé vers l'arrière sous la forme d'une partie tubulaire 22 qui traverse de façon étanche la paroi arrière de l'enveloppe 10. Un ressort de rappel 24 assure que l'ensemble constitué du piston 20 et de la membrane 12 prenne la position de repos représentée.

De façon connue, la partie tubulaire 22 du piston creux 20 reçoit un poussoir 26 qui comporte une extrémité libre 28 destinée à être reliée à la pédale de frein (non-représentée).

L'autre extrémité du poussoir 26 comporte un plongeur 30 qui est destiné, lors d'une mise en oeuvre du servomoteur, à actionner un moyen de valve classique 32 qui contrôle de façon connue le passage d'air vers la chambre arrière 18.

Conformément à l'invention le servomoteur comprend, de plus, des passages étanches traversant l'enveloppe 10, mais isolés par rapport à cette dernière, comme décrit en détail ci-dessous.

Par définition, on appellera ci-après "avant" les éléments situés à gauche sur la figure, et "arrière" ceux situés à droite.

Le servomoteur comprend au moins un tube en métal 34, qui traverse complètement l'enveloppe 10. L'enveloppe 10 est formée en deux parties 36 et 38 dont la partie avant ou face avant 36 présente une ouverture 40 bordée d'un épaulement annulaire 42. Une extrémité du tube 34 est formée avec une collerette annulaire 44 de diamètre élargi qui est montée autour de l'épaulement annulaire 42. Un joint d'étanchéité 46 est monté entre l'épaulement 42 et la collerette 44.

Le tube 34 traverse le volume intérieur de l'enveloppe 10 et passe à travers la membrane 12. La membrane 12 présente, dans la région où elle est percée par le tube 34, une manche 48 qui épouse, de manière étanche, la surface extérieure du tube 34. La partie arrière ou face arrière 38 de l'enveloppe 10 est pourvue d'une ouverture 50 définie par un épaulement annulaire 52 qui comporte un rebord radial 54 rabattu vers l'intérieur. A l'arrière, le tube 34 présente une partie annulaire 56 de diamètre élargi qui est formée avec un rebord radial 58. Lors de la fabrication du servomoteur, le rebord radial 58 est serti entre le rebord radial 54 de la face arrière 38 de l'enveloppe 10 et une plaque de renfort 60 montée fixe sur la face arrière 38. Ainsi, l'extrémité arrière du tube 34 est montée solidaire de la face arrière 38. La manche 48 comporte, à son extrémité ouverte, un bourrelet 61 qui est retenu entre le bord radial 58 et la plaque de renfort 60.

Dans son application à la fixation du servomoteur à une surface de support adjacente à la face arrière, un organe de fixation est disposé dans l'ouverture 50 de la face arrière 38 de l'enveloppe 10 ; cette vis comporte une surface radiale qui prend appui contre le rebord radial 54. Lors du montage du servomoteur sur un véhicule, l'opérateur insère, par le compartiment moteur, un outil, par exemple une clé hexagonale, dans le tube 34 et tourne la vis en engageant la clé dans une tête creuse correspondante de la vis, celle-ci coopérant avec un écrou monté fixe sur le tablier du véhicule du côté de la cabine.

Ainsi, la présente invention permet un montage facile du servomoteur sur le véhicule, l'opérateur travaillant dans le compartiment moteur et n'ayant pas besoin d'avoir accès à l'intérieur du véhicule.

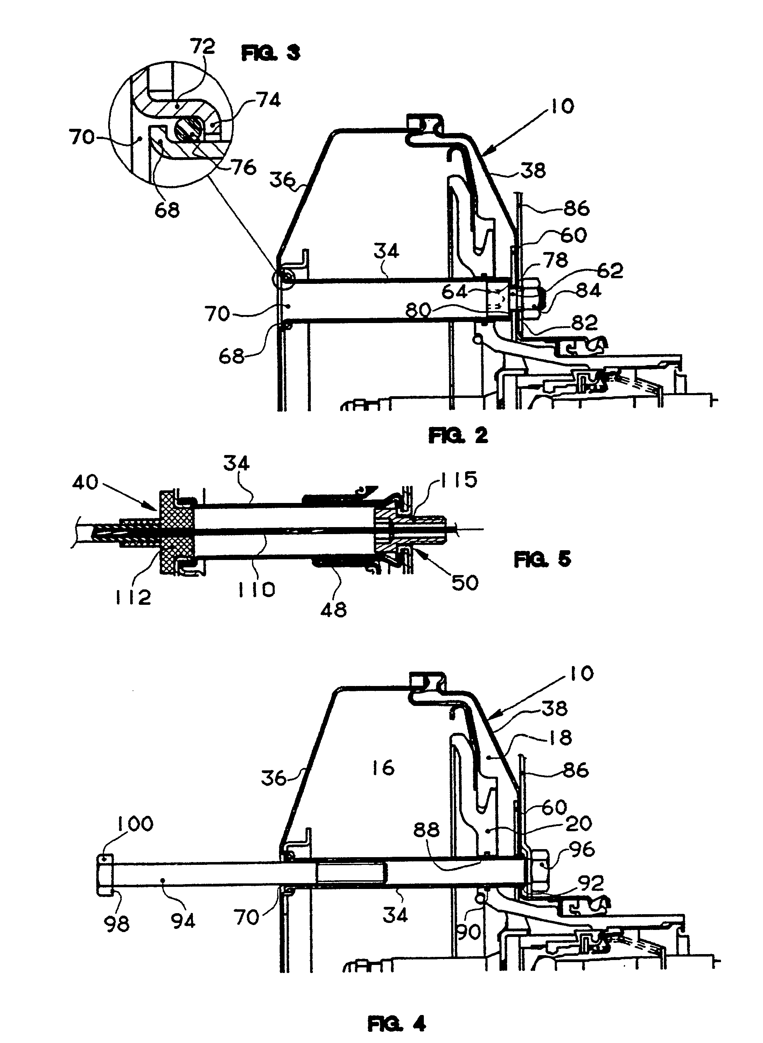

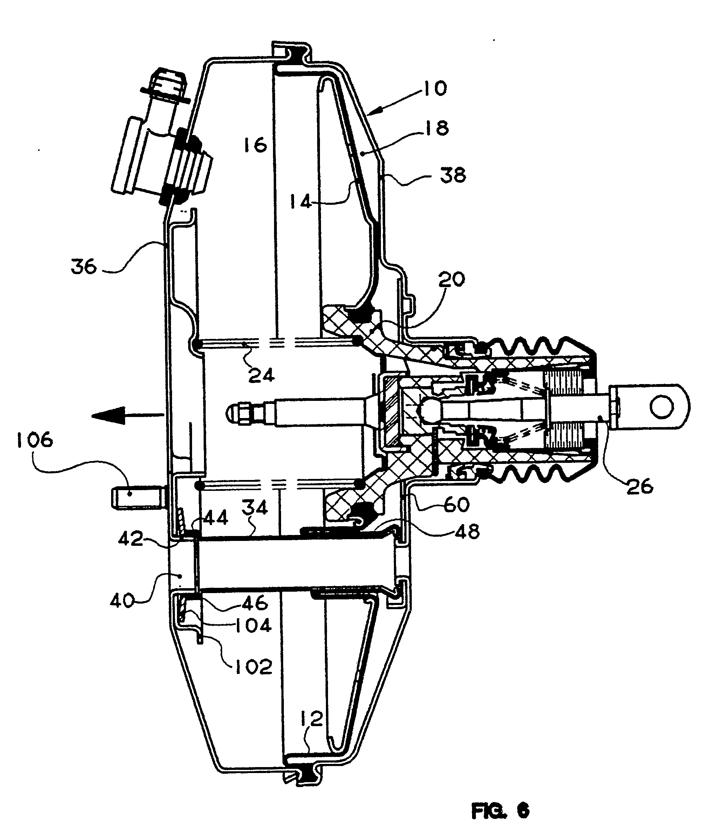

Sur la figure 2 est représenté un deuxième mode de réalisation pour la fixation du servomoteur, mais les caractéristiques évoquées peuvent être mises en oeuvre pour d'autres applications. Selon une première caractéristique, le tube 34 est retenu en place par la vis 62, pouvant être percée axialement, en évitant ainsi un sertissage sur l'extrémité du tube. Selon un deuxième caractéristique, le tube 34 comporte, à son extrémité avant, une lèvre annulaire 68 (voir figure 3). La face avant 36 de l'enveloppe 10 comprend une ouverture 70 formée par un épaulement axial annulaire 72 qui comporte un rebord 74 rabattu vers l'intérieur. Un joint d'étanchéité annulaire 76, est enfermé entre le tube 34, l'épaulement axial 72, la lèvre annulaire 68 et le rebord 74 de l'ouverture 70. L'extrémité arrière du tube 34 comprend un rebord radial intérieur 78 qui forme une surface intérieure d'appui annulaire 80. La face arrière 38 comprend une ouverture 82 qui reçoit une vis 62 qui, comme pour l'exemple précédent, comporte une surface radiale 64 qui prend appui contre le rebord radial 78 du tube 34. La vis 62 est serrée, dans un écrou 84 solidaire du tablier 86 du véhicule, par un outil inséré dans l'intérieur du tube 34.

La vis 62, dans cet exemple, a plusieurs fonctions possibles : elle peut servir à monter le servomoteur sur le tablier 86 ; elle retient le tube 34 en position ; et lorsqu'elle est pourvu d'un perçage, elle sert de guide pour un élément de commande traversant le servomoteur.

Afin d'assurer l'étanchéité de l'enveloppe 10, la vis 62 peut comporter un joint d'étanchéité.

Le mode de réalisation représenté figure 4 diffère de celui des figures 2 et 3 dans la façon dont l'extrémité arrière du tube 34 est retenu sur la face arrière 38 de l'enveloppe 10.

Dans ce mode de réalisation, le tube 34 est plus long que celui de la figure 2 et, comme décrit ci-dessous, déborde légèrement à l'extérieur de l'enveloppe 10. A son extrémité avant, le tube 34 comporte une lèvre annulaire 68 sensiblement similaire à celle de la figure 2. Comme pour le mode de réalisation précédent, la partie avant 36 comprend une ouverture 70 formée par un épaulement axial annulaire 72 qui comporte un rebord 74 rabattu vers l'intérieur. Un joint d'étanchéité annulaire 76 est disposé autour du tube 34 et est retenu entre l'épaulement 68 et le rebord 74. Lors de la fabrication du servomoteur le tube 34 est inséré dans l'ouverture 70 et passé à travers une ouverture 88 dans le piston 20 et à travers la plaque de renfort 60 et la face arrière 38 de l'enveloppe 10. Un joint annulaire 90 est monté dans l'ouverture 88 afin d'assurer l'étanchéité entre les chambres 16 et 18 du servomoteur. Après la mise en place du tube 34, un rebord radial 92 est rabattu contre la surface extérieure de la partie arrière 38 retenant ainsi le tube 34, la plaque de renfort 60 venant en appui contre un épaulement annulaire sur le tube 34. Le servomoteur est monté sur le tablier 86 par une vis de montage 94 qui coopère avec un écrou 96 monté fixe sur le tablier 86. Une surface radiale 98 de la tête 100 de la vis 94 prend appui contre l'épaulement radial 68 en retenant ainsi le servomoteur sur le tablier 86. La longueur du tube 34 est telle que, lors du serrage de la vis 94, la face avant 36 de l'enveloppe 10 reste sans contrainte mécanique. Le montage de ce mode de réalisation du servomoteur diffère des deux précédents en ce que la tête 100 de la vis 94 reste à l'extérieur du tube 34. Il n'y a donc pas besoin d'insérer un outil dans le tube. Evidemment ce mode de réalisation permet le montage du servomoteur en ne travaillant que du côté du compartiment moteur comme c'était le cas des autres modes de réalisation.

On a représenté figure 5 en coupe partielle un passage prévu pour qu'un câble 110 traverse le servomoteur. Des bouchons 112 et 115 pénètrent à force dans les ouvertures 40 et 50. Ces bouchons sont percés axialement de manière à faire office de guide-câble à l'intérieur du passage. Bien évidemment, ces bouchons pourraient être conformés pour servir de guide-tringle ou autre.

Le mode de réalisation représenté sur la figure 6 ressemble à celui de la figure 1 mais diffère de ce dernier en ce que les tubes 34 permettent de transmettre en outre des contraintes mécaniques à travers l'enveloppe 10 du servomoteur. La structure du servomoteur est sensiblement identique à celle du mode de réalisation de la figure 1 et ne sera pas redécrite.

Le servomoteur de la figure 6 comprend, entre la collerette annulaire 44 du tube 34 et une plaque de renfort avant 102, une rondelle Belleville 104. Lors de la fabrication du servomoteur, la rondelle 104 est montée avec une certaine précontrainte. Cette précontrainte a pour résultat que le tube 34 sert à renforcer l'enveloppe 10, en transmettant directement des efforts mécaniques du maître-cylindre au tablier du compartiment moteur. Le servomoteur comprend, de plus, des vis de montage dont une 106 est représentée figure 6, destinées à recevoir le maître-cylindre (non-représenté). Lors d'une mise en oeuvre du dispositif, les efforts créés entre le poussoir 26 et le maître-cylindre peuvent passer, en partie, par les tubes 34 en soulageant, ainsi, l'enveloppe 10 d'une partie des contraintes.

La rondelle 104 pourrait être remplacée par un autre type de ressort, par exemple un ressort hélicoïdal, et la collerette 44 pourrait être sertie, avec une certaine précontrainte, sur l'épaulement annulaire 42 en supprimant ainsi l'utilisation de la rondelle 104.

**Revendications**

1. Servomoteur d'assistance au freinage comprenant une enveloppe (10) et une membrane souple (12) qui divise de manière étanche l'intérieur de l'enveloppe en une chambre avant (16) et une chambre arrière (18), un piston creux (20) mobile dans l'enveloppe (10), auquel est fixée ladite membrane souple (12), et au moins un passage qui traverse le servomoteur de manière étanche d'une face à la face opposée de l'enveloppe, ledit passage étant constitué par un tube (34) dont la première extrémité est fixée à l'intérieur de l'enveloppe 10 à l'une des faces de cette dernière, caractérisé en ce qu'après l'assemblage complet du servomoteur la seconde extrémité dudit tube (34) est montée à coulissement sur un épaulement radial (42) prévu à cet effet à l'intérieur de l'enveloppe (10) sur l'autre face de cette dernière.

2. Servomoteur selon la revendication 1 caractérisé en ce que ladite seconde extrémité comporte une lèvre annulaire (68) se dirigeant vers ledit épaulement radial (42), tandis que ce dernier comporte un rebord (74) rabattu vers ledit tube (34), l'espace compris entre ladite lèvre annulaire (68), ledit épaulement radial (42), ledit tube (34) et ledit rebord (74) enfermant un joint d'étanchéité (76).

3. Servomoteur selon la revendication 1 caractérisé en ce qu'un moyen de ressort (104) est disposé entre ladite seconde extrémité du dit tube et la face correspondante de ladite enveloppe afin de déterminer une précontrainte entre lesdites faces de ladite enveloppe (10).

4. Servomoteur selon l'une quelconque des revendications précédentes, caractérisé en ce que ladite première extrémité comporte un rebord radial (58) serti à la face correspondante de l'enveloppe au moyen du bord de l'ouverture ménagée pour le passage.

5. Servomoteur selon l'une quelconque des revendications précédentes caractérisé en ce que ledit tube (34) traverse ladite membrane souple (12).

6. Servomoteur selon la revendication 5 caractérisé en ce que ladite membrane souple (12) comprend une manche ouverte (48) dans laquelle passe ledit tube (34), dont l'extrémité ouverte comprend un bourrelet (61) compressé entre un rebord radial (58) de ladite première extrémité et la face correspondante de ladite enveloppe (10).

7. Servomoteur selon l'une quelconque des revendications 1 à 4 caractérisé en ce que ledit tube (34) traverse ledit piston creux (20), un joint d'étanchéité annulaire (90) ménageant l'étanchéité entre lesdites chambres (16, 18).

8. Servomoteur selon l'une quelconque des revendications précédentes, caractérisé en ce qu'il comporte au moins deux passages recevant respectivement un organe de fixation tel qu'une vis.

9. Servomoteur selon l'une quelconque des revendications 1 à 7 caractérisé en ce qu'au moins une des extrémités dudit tube (34) est fermée au moyen d'un bouchon percé (112, 115) faisant office de guide pour l'élément traversant ledit tube (34).

**Patentansprüche**

1. Bremshilfe-Servomotor, mit einer Hülle (10) und einer biegsamen Membrane (12), die das Innere der Hülle abgedichtet in eine Vorderkammer (16) und eine Rückkammer (18) aufteilt, mit einem in der Hülle (10) beweglichen, hohlen Kolben (20), an welchem diese biegsame Membrane (12) befestigt ist, und mit wenigstens einem Durchgang, der den Servomotor von einer Fläche bis zu der abgewandten Fläche der Hülle abgedichtet durchquert, wobei dieser Durchgang aus einem Rohr (34) besteht, wovon das erste Ende im Innereren der Hülle (10) an einer der Flächen derselben befestigt ist, dadurch gekennzeichnet, daß nach dem vollständigen Zusammenbau des Servomotors das zweite Ende des gennanten Rohrs (34) auf einer radialen Schulter (42), die zu diesem Zweck im Inneren der Hülle (10) auf der anderen Fläche derselben vorgesehen ist, gleitend gelagert ist.

2. Servomotor nach Anspruch 1, dadurch gekennzeichnet, daß das genannte zweite Ende eine ringförmige Lippe (68) umfaßt, die sich in Richtung dieser radialen Schulter (42) hin bewegt, wobei diese einen zu diesem Rohr (34) hin umgeschlagenen Rand (74) aufweist, wobei der zwischen dieser ringförmigen Lippe (68), dieser radialen Schulter (42), diesem Rohr (34) und diesem Rand (74) enthaltene Raum eine Dichtung (76) beinhaltet.

3. Servomotor nach Anspruch 1, dadurch gekennzeichnet, daß ein Federmittel (104) zwischen diesem zweiten Ende dieses Rohrs und der entsprechenden Fläche dieser Hülle angeordnet ist, um eine Vorspannung zwischen diesen Flächen dieser Hülle (10) zu bestimmen.

4. Servomotor nach einem der vorstehenden Ansprüche, dadurch gekennzeichnet, daß dieses erste Ende einen radialen Rand (58), der in der entsprechenden Fläche der Hülle mittels des Randes der für den Durchgang vorgesehenen Öffnung verstemmt ist, aufweist.

5. Servomotor nach einem der vorstehenden Ansprüche, dadurch gekennzeichnet, daß dieses Rohr (34) diese biegsame Membrane (12) durchquert.

6. Servomotor nach Anspruch 5, dadurch gekennzeichnet, daß diese biegsame Membrane (12) eine offene Manschette (48) umfaßt, welche dieses Rohr (34) durchquert, deren offenes Ende einen Wulst (61) umfaßt, der zwischen einem radialen Rand (58) dieses ersten Endes und der entsprechenden Fläche dieser Hülle (10) zusammengedrückt ist.

7. Servomotor nach einem der Ansprüche 1 bis 4, dadurch gekennzeichnet, daß dieses Rohr (34) diesen hohlen Kolben (20) durchquert, wobei eine ringförmige Dichtung (90) für die Dichtung zwischen diesen Kammern (16, 18) sorgt.

8. Servomotor nach einem der vorstehenden Ansprüche, dadurch gekennzeichnet, daß er wenigstens zwei Durchgänge, die jeweils ein Befestigungselement wie eine Schraube aufnehmen, umfaßt.

9. Servomotor nach einem der Ansprüche 1 bis 7, dadurch gekennzeichnet, daß wenigstens eines der Enden dieses Rohres (34) mittels eines durchbohrten Stöpsels (112, 115), der als Führung für das dieses Rohr (34) durchquerende Element dient, geschlossen ist.

## Claims

1. Brake booster comprising a casing (10) and a flexible diaphragm (12) which divides the interior of the casing sealingly into a front chamber (16) and a rear chamber (18), a hollow piston (20) which is movable in the casing (10) and to which said flexible diaphragm (12) is fastened, and at least one passage which extends through the booster sealingly from one face of the casing to the opposite face, said passage consisting of a tube (34), the first end of which is fastened inside the casing (10) to one of the faces of the latter, characterised in that, after the complete assembly of the booster, the second end of said tube (34) is slideably mounted on a radial shoulder (42) provided for this purpose inside the casing (10) on the other face of the latter.

2. Booster according to Claim 1, characterised in that said second end comprises an annular lip (68) directed towards said radial shoulder (42), whilst the latter has a rim (74) turned down towards said tube (34), the space located between said annular lip (68), said radial shoulder (42), said tube (34) and said rim (74) containing a gasket (76).

3. Booster according to Claim 1, characterised in that a spring means (104) is arranged between said second end of said tube and the corresponding face of said casing, so as to determine a prestress between said faces of said casing (10).

4. Booster according to any of the preceding claims, characterised in that said first end comprises a radial rim (58) crimped to the corresponding face of the casing by means of the edge of the orifice provided for the passage.

5. Booster according to any of the preceding claims, characterised in that said tube (34) passes through said flexible diaphragm (12).

6. Booster according to Claim 5, characterised in that said flexible diaphragm (12) comprises an open cuff (48) in which passes said tube (34) and the open end of which has a bead (61) compressed between a radial rim (58) of said first end and the corresponding face of said casing (10).

7. Booster according to any of Claims 1 to 4, characterised in that said tube (34) passes through said hollow piston (20), an annular gasket (90) ensuring the sealing between said chambers (16, 18).

8. Booster according to any of the preceding claims, characterised in that it comprises at least two passages respectively receiving a fastening member, such as a screw.

9. Booster according to any of Claims 1 to 7, characterised in that at least one of the ends of said tube (34) is closed by means of a pierced plug (112, 115) functioning as a guide for the element passing through said tube (34).

**FIG. 1**

FIG. 3

FIG. 2

FIG. 5

FIG. 4

FIG. 6